# EUROPÄISCHE PATENTSCHRIFT

(11) **EP 3 070 558 B1**
(45) Veröffentlichungstag und Bekanntmachung des Hinweises auf die Patenterteilung: **09.05.2018**
(21) Anmeldenummer: 15159471.0
(22) Anmeldetag: 17.03.2015
(51) Int. Cl.: G05B 19/042, G05B 19/418

(54) **VERFAHREN ZUM KONFIGURIEREN EINES EMBEDDED-GERÄTS**
METHOD FOR CONFIGURING AN EMBEDDED DEVICE
PROCÉDÉ DE CONFIGURATION D'UN APPAREIL INTÉGRÉ

(43) Veröffentlichungstag der Anmeldung: 21.09.2016
(73) Patentinhaber: SICK AG, 79183 Waldkirch/Breisgau (DE)
(72) Erfinder: Schwenkel, Nils, 79183 Waldkirch (DE); Heidepriem, Sebastian, 79297 Winden i.E. (DE); Jeschall, Patrick, 79348 Freiamt (DE)
(74) Vertreter: Manitz Finsterwald Patentanwälte PartmbB

(56) Entgegenhaltungen:
- WO-A2-2004/074952
- WO-A2-2005/038613
- US-B1- 6 757 587

## Beschreibung

Die vorliegende Erfindung betrifft Verfahren zum Konfigurieren eines Embedded-Geräts und Verfahren zu dessen Betrieb.

Die WO 2005/038613 A2 beschreibt ein Verfahren zum Konfigurieren eines Embedded-Geräts. Das Embedded-Gerät wird verwendet, um Messergebnisse verschiedener Sensoren zu erfassen. Hierzu kann das Embedded-Gerät durch eine XML-Konfigurationsdatei konfiguriert werden.

Aus der WO 2004/074952 A2 ist die automatische Konfiguration eines Computers bekannt. Gemäß der WO 2004/074952 A2 wird ein Konfigurationsskript mit Code in einer Programmiersprache durch ein Konfigurationsprogramm in eine Parameterdatei umgewandelt.

Ferner offenbart die US 6 757 587 B1 die Steuerung eines Roboters, wobei eine XML-Datei mit Informationen über den Roboter von einem Validator überprüft wird. Der Validator gibt Systeminformationen über den Roboter aus, welche in einem Controller verarbeitet werden, um den Roboter anzusteuern.

Embedded-Geräte sind insbesondere elektronische Rechner oder Computer, die in einen technischen Kontext eingebunden bzw. eingebettet sind. Das Embedded-Gerät kann in dem technischen Kontext z.B. die Steuerung und Regelung von Prozessen, die Überwachung von Messgrößen oder die Verarbeitung von Daten übernehmen. Unter einem Embedded-Gerät kann also beispielsweise eine speicherprogrammierbare Steuerung (SPS) oder generell ein Automatisierungsgerät, wie z.B. ein Servoantrieb, ein HMI (Human Machine Interface) oder ein Frequenzumrichter verstanden werden. Solche Embedded-Geräte kommen in einer Vielzahl von Anwendungen zum Einsatz und steuern beispielsweise automatisierte Prozesse in Maschinen, Robotern oder Fertigungsanlagen.

Wird eine industrielle Fertigungsanlage mit Embedded-Geräten ausgestattet, so werden die Embedded-Geräte derart programmiert und konfiguriert, dass sie an die Gegebenheiten der industriellen Fertigungsanlage angepasst sind. Soll die Fertigungsanlage nun nachträglich verändert werden, um einen neuen Produktionsprozess durchführen, so kann es ausreichen, eine Konfiguration der Embedded-Geräte zu verändern. Dazu müssen beispielsweise die in den Embedded-Geräten gespeicherten Parameter bzw. Variablen verändert werden, um dem neuen Produktionsprozess Rechnung zu tragen.

Üblicherweise werden zu diesem Zweck die Werte der Parameter in einem Programmiersystem verändert, wobei anschließend eine Software der Embedded-Geräte vollständig neu erzeugt wird. Die vollständige Erneuerung der Software ist dabei aufwändig und benötigt entsprechende Ressourcen.

Alternativ zu der Veränderung in dem Programmiersystem kann auch ein Modellierungs- bzw. Konfigurierungstool zur Änderung verwendet werden. Ein solches Konfigurierungstool erzeugt als Ergebnis beispielsweise Konfigurationsdateien, die keinen Code in einer Programmiersprache umfassen sondern in einer Auszeichnungssprache, wie z.B. XML, verfasst sind.

Soll nun ein Embedded-Gerät oder eine Fertigungsanlage mit einer Vielzahl von Embedded-Geräten mit der neuen Konfiguration betrieben werden, so müssen die in der Konfigurationsdatei enthaltenen Informationen z.B. manuell von einem Programmierer in den der Software der Embedded-Geräte zugrundeliegenden Code übertragen werden. Aus dem manuell angepassten Code kann dann eine neue Software für die Embedded-Geräte erzeugt werden, die dann den Betrieb der Embedded-Geräte mit der neuen Konfiguration ermöglicht.

Die Anpassung des Codes der Embedded-Geräte ist dabei aufwändig und zudem fehleranfällig.

Es ist daher die der Erfindung zugrundeliegende Aufgabe, ein Verfahren anzugeben, welches die Konfiguration eines Embedded-Geräts auf einfache und effiziente Weise ermöglicht und damit den Betrieb des Embedded-Gerätes vereinfacht. Diese Aufgabe wird durch ein Verfahren gemäß Anspruch 1 gelöst.

Im Folgenden werden die Elemente, die bei dem erfindungsgemäßen Verfahren zum Einsatz kommen und ihr vorteilhaftes Zusammenwirken erläutert und beschrieben.

Der Begriff der "Konfiguration des Embedded-Gerätes" wird im vorliegenden Text auch im Sinne eine Neu-Konfiguration verwendet und kann auch die Anpassung der Konfiguration des Embedded-Gerätes während des Betriebes des Embedded-Gerätes umfassen.

Die Transformationsbeschreibung wird dazu eingesetzt, aus den Eingangsdaten eine Datenstruktur zu erzeugen, die von dem Embedded-Gerät verwendet werden kann. Die Eingangsdaten können dabei manuell oder von einem Konfigurationstool erstellt worden sein und Informationen darüber enthalten, wie sich das Embedded-Gerät während des Betriebs verhalten soll.

Beispielsweise können die Eingangsdaten Informationen umfassen, die angeben, wie eine graphische Benutzeroberfläche (GUI - Graphical User Interface) des Embedded-Geräts aufgebaut ist. Bei anderen Anwendungen können die Eingangsdaten zu verwaltende oder zu verarbeitende Daten enthalten, wie z.B. Namen und Adressen von Kunden, um beispielsweise einen Verkaufsprozess zu automatisieren. Weiterhin können auch Informationen über einen industriellen Herstellungsprozess, wie z.B. eine Stückzahl pro Zeiteinheit, Umdrehungszahlen von zu steuernden Motoren, Taktfrequenzen, Schwellenwerte für strom- oder spannungsgesteuerte Vorgänge und dergleichen mehr von den Eingangsdaten umfasst sein.

Wie erwähnt können die Eingangsdaten von einem Konfigurationstool erstellt werden und enthalten insofern keinen Code in einer Programmiersprache. Als Programmiersprache wird hier eine Sprache bezeichnet, welche sowohl Datenstrukturen als auch Algorithmen umfasst. Algorithmen sind insbesondere Verarbeitungsanweisungen bzw. Rechenvorschriften. Dementsprechend ist eine in einer Auszeichnungssprache verfasste Datei, welche nur Daten und Datenstrukturen enthält, nicht in einer Programmiersprache verfasst. Die nachfolgend dargestellten beispielhaften XML-Dateien sind somit nicht in einer Programmiersprache verfasst.

Bevorzugt liegen die Eingangsdaten in einer Auszeichnungssprache vor, wie beispielsweise XML (Extensible Markup Language). Die Eingangsdaten können in Form einer Konfigurationsdatei, insbesondere im XML-Format, oder als Datenstrom oder dergleichen vorliegen.

Die Transformationsbeschreibung umfasst ebenfalls keinen Code in einer Programmiersprache gemäß den obigen Definitionen. Auch die Transformationsbeschreibung ist bevorzugt in einer Auszeichnungssprache verfasst, vorzugsweise ebenfalls in XML.

Ein Beispiel für Eingangsdaten in Form einer Konfigurationsdatei, welche Kundendaten enthält, ist im Folgenden als XML-Datei aufgeführt. In der Konfigurationsdatei sind die Namen, Vornamen, Adressen und Kundennummern mehrerer Personen als Strukturelemente gespeichert.

```
 <?xml version="1.0" encoding="UTF-8"?>
 <Kunden xmlns:xsi="http://www.w3.org/2001/XMLSchema-instance"
 xsi:noNamespaceSchemaLocation="Kundendaten.xsd">
 <Person Name="Mustermann" Vorname="Max">
   <Adresse Strasse="Heimweg 1" PLZ="12342" Ort="Hohenheim"/>
   <Account KundenNummer="98234987345"/>
 </Person>
 <Person Name="Mustermann" Vorname="Eva">
   <Adresse Strasse="Heimweg 1" PLZ="12342" Ort="Hohenheim"/>
   <Account KundenNummer="98234987346"/>
 </Person>
 <Person Name="Mustermann" Vorname="Jan">
   <Adresse Strasse="Heimweg 1" PLZ="12342" Ort="Hohenheim"/>
   <Account KundenNummer="98234987347"/>
 </Person>
 <Person Name="Herrmann" Vorname="Jonathan">
   <Adresse Strasse="Haupstraße 22" PLZ="03812" Ort="Feldheim"/>
   <Account KundenNummer="92873444683"/>
 </Person>
 <Person Name="Herrmann" Vorname="Ines">
   <Adresse Strasse="Haupstraße 22" PLZ="03812" Ort="Feldheim"/>
   <Account KundenNummer="92873444685"/>
 </Person>
 <Person Name="Herrmann" Vername="Julian">
   <Adresse Strasse="Haupstraße 22" PLZ="03812" Ort="Feldheim"/>
   <Account KundenNummer="92873444686"/>
 </Person>
 <Person Name="Herrmann" Vorname="Angelika">
   <Adresse Strasse="Haupstraße 22" PLZ="03812" Ort="Feldheim"/>
   <Account KundenNummer="92873444931"/>
 </Person>
 </Kunden>
```

Um die Konfiguration des Embedded-Geräts nun entsprechend anzupassen (beim vorliegenden Beispiel an die Konfiguration in der Konfigurationsdatei) und damit einen veränderten Betrieb des Embedded-Geräts zu ermöglichen, wird mit Hilfe der Transformationsbeschreibung ein Transformator konfiguriert. Die Transformationsbeschreibung enthält dabei Vorgaben darüber, welche Daten aus den Eingangsdaten (hier der Konfigurationsdatei) entnommen werden sollen, um den Betrieb des Embedded-Geräts zu konfigurieren, umfasst jedoch ebenso wie Eingangsdaten (hier also die Konfigurationsdatei) keinen Code in einer Programmiersprache und ist bevorzugt ebenfalls in einer Auszeichnungssprache verfasst, wie z.B. XML.

Der Transformator (also das Transformationsmittel) ist dabei ein ausführbares Programm bzw. ausführbarer Code, welcher mittels der Transformationsbeschreibung konfiguriert wird. Der Transformator selbst kann so generisch aufgebaut sein, dass er mittels beliebiger Transformationsbeschreibungen konfigurierbar ist. Auf diese Weise können nahezu beliebige Eingangsdaten von dem Transformator verarbeitet werden. Der Begriff der "Konfiguration" soll im Zusammenhang mit dem Transformator so verstanden werden, dass -je nach den Gegebenheiten - entweder zunächst ein Transformator generiert und dann konfiguriert wird oder ein bereits bestehender Transformator konfiguriert wird.

Im Folgenden ist ein Beispiel einer Transformationsbeschreibung im XML-Format angegeben. Die gezeigte beispielhafte Transformationsbeschreibung veranlasst den mit ihr erzeugten Transformator dazu, aus der oben beispielhaft angegebenen Konfigurationsdatei die Namen, Vornamen, Adressen und Kundennummern sämtlicher Personen zu entnehmen. Dabei werden beispielsweise die Namen als String-Variablen ("toStringTransformation") und die Kundennummer als Ganzzahl ohne Vorzeichen ("toUnsignedIntegralNumberTransformation") entnommen.

```
 <?xml version="1.0" encoding="UTF-8"?>
 <TransformationLanguage xmlns:xsi="http://www.w3.org/2001/XMLSchema-
 instance" xsi:noNamespaceSchemaLocation="TransformationLanguage.xsd">
 <Transformation xsi:type="toListTransformation" Source-
 Path="/Kunden/Person" DestName="MeineKunden">
   <InnerTransformation xsi:type="toStringTransformation" Source-
   Path="@Name" DestName="name">
   </ InnerTransformation >
   <InnerTransformation xsi:type="toStringTransformation" Source-
   Path="@Vorname" DestName="vorname">
   </InnerTransformation>
   <InnerTransformation xsi:type="toStringTransformation" Source-
   Path="Adresse/@Strasse" DestName="strasse">
   </InnerTransformation>
   <InnerTransformationxsi:type="toUnsignedIntegralNumberTransformation"
   SourcePath="Adresse/@PLZ" DestName="postleitzahl" >
   </InnerTransformation>
   <InnerTransformationxsi:type="toStringTransformation" Source-
   Path="Adresse/@Ort" DestName="ort">
   </InnerTransformation>
   <InnerTransformation
   xsi:type="toUnsignedIntegralNumberTransformation" Source-
   Path="Account/@KundenNummer" DestName="kundenNummer" >
   </InnerTransformation>
 </Transformation>
 </TransformationLanguage>
```

Allgemein enthält die Transformationsbeschreibung Referenzen auf Strukturelemente der Eingangsdaten und beschreibt, wie diese Strukturelemente in einer Hochsprache (z.B. in C oder C++-Code) repräsentiert werden sollen. Die Transformation der Strukturelemente in verarbeitbare Daten bzw. ausführbaren Code erfolgt dann durch den Transformator, welcher mittels der Transformationsbeschreibung konfiguriert wird.

Hat der Transformator die Eingangsdaten verarbeitet, so liegen die von dem Transformator erzeugten Daten vor und werden an das Embedded-Gerät übertragen. Die Transformationsbeschreibung enthält dabei auch Informationen, wie die von dem Transformator erzeugten Daten strukturiert sein müssen, um von dem Embedded-Gerät im Betrieb verwendet zu werden. Die erzeugten Daten können dabei in einem Format vorliegen, das ausführbarem Code der von dem Embedded-Gerät verwendeten Hochsprache entspricht.

Das Embedded-Gerät kann die übertragenen Daten nun während des Betriebs verwenden. Beispielsweise kann das Embedded-Gerät bei den oben angegebenen Beispielen nach dem Übertragen der von dem Transformator erzeugten Daten an das Embedded-Gerät auf neue Kundendaten zurückgreifen oder neue Taktfrequenzen verwenden, um z.B. an das Embedded-Gerät angeschlossene Elektromotoren anzusteuern.

Mit dem erfindungsgemäßen Verfahren ist es somit möglich, Embedded-Geräte in verschiedenen Konfigurationen zu betreiben, ohne eine Programmierung der Embedded-Geräte vollständig neu zu erstellen. Trotzdem ist es dabei möglich, weiterhin Eingangsdaten oder Konfigurationsdateien zu verwenden, die nicht in einer Programmiersprache verfasst sind. Somit bleibt der Einsatz von Konfigurationstools möglich.

Dabei kann der Transformator die Eingangsdaten also derart verarbeiten, dass nach den Vorgaben der Transformationsbeschreibung diejenigen Daten aus den Eingangsdaten entnommen werden, die in der Transformationsbeschreibung spezifiziert sind. Der Transformator erzeugt dabei Daten, die von dem Embedded-Gerät verarbeitbar sind. Dies bedeutet, dass die erzeugten Daten nicht in einem zusätzlichen Schritt in ein ausführbares Format übersetzt (kompiliert) werden müssen.

Vielmehr können Daten erzeugt werden, die von dem Embedded-Gerät direkt verarbeitbar sind, ohne den Umweg über eine Programmiersprache und eine zusätzliche Übersetzung aus der Programmiersprache beschreiten zu müssen.

Vorteilhafte Weiterbildungen der Erfindung sind der Beschreibung, den Unteransprüchen sowie der Zeichnung zu entnehmen.

Die von dem Transformator erzeugten Daten können ein "Repository", d.h. einen Datenspeicher, umfassen. Insbesondere können in dem Repository sämtliche von dem Transformator erzeugten Daten zusammengefasst sein. In dem Repository können sämtliche erzeugten Daten in strukturierten Arrays von C-Code oder einer anderen Programmiersprache vorliegen.

Gemäß einer vorteilhaften Ausführungsform werden also von dem Transformator anhand der Vorgaben aus der Transformationsbeschreibung Informationen aus den Eingangsdaten entnommen und in das Repository übertragen, wobei das Repository insbesondere in Datenstrukturen gegliederte Variablen umfasst.

Die Daten können dann in dem Repository in in Datenstrukturen gegliederten Variablen vorliegen, beispielsweise einem "Array of Struct". Bei dem "Array of Struct" kann es sich um ein Feld von Strukturen handeln, wobei jede Struktur eine Kombination mehrere Variablen sein kann. Bei dem oben genannten Beispiel wird also ein Feld mit dem Namen "MeineKunden" angelegt, in welchem jeweils Strukturen angelegt werden, die aus den Variablen "Name", "Vorname", "Strasse", "PLZ", "Ort" und "Kundennummer" bestehen. Sämtliche den Eingangsdaten von dem Transformator entnommenen Informationen können so in dem Repository in einer gleichartigen Datenstruktur, nämlich dem Array of Struct, abgelegt sein.

Gemäß einer weiteren vorteilhaften Ausführungsform der Erfindung werden ausschließlich solche Informationen in das Repository übernommen, die in der Transformationsbeschreibung definiert sind. Dies bedeutet, dass ausschließlich in der Transformationsbeschreibung festgelegt wird, welche Informationen für das jeweilige Embedded-Gerät relevant sind. Nicht relevante Informationen können dann weggelassen werden, um beispielsweise den Speicherbedarf des Repositorys bzw. der von dem Transformator erzeugten Daten zu verringern. Insbesondere können z.B. solche Informationen weggelassen werden, die Funktionen betreffen, die das jeweilige Embedded-Gerät nicht unterstützt.

Erfindungsgemäß umfassen die von dem Transformator erzeugten und von dem Embedded-Gerät verarbeitbaren Daten auch eine Programmstruktur, welche von dem Transformator erzeugt wird. Die Programmstruktur kann dabei der Struktur einer Hochsprache entsprechen. Unter Hochsprache wird hierbei eine Program-miersprache wie beispielsweise C, C++, C#, Java oder dergleichen verstanden. Die Programmstruktur kann dabei ebenfalls ausführbar sein, wodurch das Embedded-Gerät ohne Zwischenschritte auf die in der Programmstruktur enthaltenen Informationen zugreifen kann. Insbesondere kann die Programmstruktur Definitionen von Variablen enthalten, wobei die Variablen selbst bzw. deren Werte wiederum in dem Repository enthalten sein können. Zusätzlich kann die Programmstruktur auch Definitionen von Funktionen und Funktionsanweisungen enthalten.

Besonders bevorzugt sind die verarbeitbaren Daten derart angelegt, dass sie von einer Hochsprache, bevorzugt C oder C++, nativ gelesen werden können. Dies bedeutet, dass die verarbeitbaren Daten so gespeichert sind, insbesondere in einem verarbeitbaren bzw. ausführbaren Format, dass sie von dem in einer Hochsprache programmierten Embedded-Gerät gelesen werden können. Die verarbeitbaren Daten liegen aber nicht in der Hochsprache selbst vor. Stattdessen liegen die verarbeitbaren Daten in einem Format vor, das dem von ausführbarem Code der Hochsprache entspricht. Auf diese Weise können sich die verarbeitbaren Daten nahtlos in den ausführbaren Code des Embedded-Geräts eingliedern.

Gemäß einer weiteren vorteilhaften Ausführungsform legt der Transformator die Datenstrukturen in dem Repository an und die Datenstrukturen werden beim Betrieb des Embedded-Geräts mit Werten gefüllt. Dies bedeutet, dass zunächst z.B. ein Array of Struct mit fester Länge erzeugt (d.h. instanziiert) wird (z.B. struct[1024]), aber keine Initialisierung der Werte erfolgt. Die Initialisierung, d.h. das Festlegen der Werte der angelegten Variablen, erfolgt dann erst zur Laufzeit.

Zur Festlegung der Werte kann ein Interpreterprogramm verwendet werden, welches zu dem Transformator gehört, interpretativ arbeitet und die Informationen aus den Eingangsdaten einliest und aus den Informationen die Werte der Variablen festlegt. Das Interpreterprogramm kann auch von dem Embedded-Gerät ausgeführt werden.

Bevorzugt wird ein solches Repository dann in einem wiederbeschreibbaren Speicher (z.B. dem RAM - Random Access Memory) des Embedded-Geräts gespeichert. Da noch keine Initialisierung erfolgt ist, muss der Speicher beschreibbar sein, weil sich sein Inhalt zur Laufzeit verändert.

Gemäß einer alternativen Ausführungsform legt der Transformator die Datenstruktur in dem Repository an und initialisiert (oder belegt) sie mit Werten aus den Eingangsdaten. Es wird ein konstantes Array of struct (const struct []) erzeugt. Dieses konstante Array wird im Folgenden auch als konstante Struktur bezeichnet.

Ein Beispiel für eine erzeugte konstante Struktur ist im Folgenden aufgeführt. Die Struktur ist aus der weiter oben gezeigten Konfigurationsdatei unter Verwendung der obigen Transformationsbeschreibung zur Erzeugung des Transformators entstanden.

```
 #include "KundenDaten.h"
 KD_PersonenStruct KD_Personen[7] =
 {
 {
    "Mustermann",
    "Max",
    "Heimweg 1",
    "Hohenheim",
    12342,
    & (KD_Personen[1])
 },
 { "Mustermann",
    "Eva",
    "Heimweg 1",
    "Hohenheim",
    12342,
    &(KD_Personen[2])
 },
 {
    "Mustermann",
    "Jan",
    "Heimweg 1",
    "Hohenheim",
    12342,
    &(KD_Personen[3])
 },
 { "Herrmann",
    "Jonathan",
    "Haupstraße 22",
    "Feldheim",
    3812,
    &(KD_Personen[4])
 }, {
    "Herrmann",
    "Ines",
    "Haupstraße 22",
    "Feldheim",
    3812,
    &(KD_Personen[5])
 }, {
    "Herrmann",
    "Julian",
    "Haupstraße 22",
    "Feldheim",
    3812,
    &(KD_Personen[6])
 },
 {
    "Herrmann",
    "Angelika",
    "Haupstraße 22",
    "Feldheim",
    3812,
    NULL
 }
 };
```

Die in dem obigen Beispiel referenzierte "KundenDaten.h" ist nachfolgend dargestellt.

```
 typedef struct _KD_PersonenStruct
 {
 const char * const name;
 const char * const vorname;
 const char * const strasse;
 const char * const ort;
 const unsigned long long postleitzahl;
 const struct _KD_PersonenStruct * const pNext;
 } KD_PersonenStruct;
 extern const KD_PersonenStruct KD_Personen[7];
```

Die konstante Struktur ist hier voranstehend nur zur Verständlichkeit in einer Hochsprache dargestellt. Die dargestellte Form entspricht aber nicht der Form, in welcher die konstante Struktur auf das Embedded-Gerät übertragen wird. Die Übertragung auf das Embedded-Gerät erfolgt in einer verarbeitbaren (Daten-) Form, welche insbesondere für den Menschen nicht lesbar ist. Jedoch entspricht der Informationsgehalt der voranstehend gezeigten Struktur dem Informationsgehalt, welcher - in dem gewählten Beispiel - an das Embedded-Gerät übertragen würde.

Bevorzugt wird ein Repository einer solchen Ausgestaltung dann in einem Nurlesespeicher (ROM - Read Only Memory) des Embedded-Geräts gespeichert. Da das Repository in dieser Ausführungsform aus Konstanten besteht, ändern sich die Daten des Repositorys nach dem einmaligen Beschreiben des ROMs im Betrieb des Embedded-Geräts nicht. Aus diesem Grund kann das Repository in dem ROM gespeichert werden, wodurch sich insbesondere bei kleineren Prozessoren des Embedded-Geräts ein Kostenvorteil ergeben kann.

Weiter bevorzugt ist die Transformationsbeschreibung derart ausgewählt, dass ein benötigter Speicherplatz für das resultierende Repository eine solche Größe hat, dass er kleiner oder gleich dem Speicherplatz des Nurlesespeichers des Embedded-Geräts ist. Anders ausgedrückt wird das Repository derart angelegt, dass es auf den Speicherplatz eines ROMs des Embedded-Geräts angepasst ist. Dies kann beispielsweise durch eine entsprechende Wahl der Transformationsbeschreibung erreicht werden. Gegebenenfalls kann die Transformationsbeschreibung verändert werden, z.B. um Variablen mit verkürzter Zeichenfolge in dem Repository abzulegen, so dass das Repository eine gewünschte Größe besitzt. Anstelle des Repositorys können auch sämtliche von dem Transformator erzeugten Daten eine Größe aufweisen, die kleiner oder gleich dem Speicherplatz des Nurlesespeichers des Embedded-Geräts ist.

Gemäß einer weiteren vorteilhaften Ausführungsform enthalten die von dem Transformator erzeugten Daten Binärcode. Wird Binärcode erzeugt, ist zur Laufzeit keine Übersetzung bzw. Kompilierung notwendig, wodurch ein veränderter Betrieb des Embedded-Geräts unmittelbar nach der Übertragung der vom Transformator erzeugten Daten beginnen kann. Dabei kann der Binärcode in dem Repository und/oder der Programmstruktur enthalten sein. Bevorzugt bestehen das Repository und/oder die Programmstruktur auch vollständig aus Binärcode.

Vorteilhafterweise umfasst das Repository also ein Array von Strukturen (Array of Struct), wobei das Array insbesondere ein Array mit festgelegter Länge und/oder mit konstanten Werten ist. Wie bereits oben ausgeführt, kann das Array bei fester Länge im RAM und bei der alternativen oder zusätzlichen Verwendung von ausschließlich konstanten Werten im ROM des Embedded-Geräts gespeichert werden.

Bevorzugt greift ein Anwendungsprogramm des Embedded-Geräts mittels einer Schnittstelle auf die verarbeitbaren Daten zu. Die Schnittstelle kann dabei ein eigenes Programm sein, das den Zugriff auf das Repository und/oder die Programmstruktur ermöglicht. Bei dem Anwendungsprogramm kann es sich um eine auf dem Embedded-Gerät ausgeführte Applikation handeln, beispielsweise eine Motorsteuerung oder dergleichen. Mittels der Schnittstelle ist es insbesondere möglich, dass ein Anwendungsprogramm, welches auf einer ersten Hochsprache basiert, auf die verarbeitbaren Daten zugreifen kann, obwohl die verarbeitbaren Daten eine Struktur umfassen, die nur von einer zweiten Hochsprache nativ gelesen werden kann.

Gemäß einer weiteren vorteilhaften Ausführungsform umfasst der Transformator einen Filter, wobei der Filter die Eingangsdaten in eine Zwischendatei umwandelt, wobei ferner die Zwischendatei nur für das Embedded-Gerät relevante Informationen enthält. Die Zwischendatei kann somit im Vergleich zu den Eingangsdaten einen kleineren Speicherbedarf haben und die Verarbeitung durch den Transformator beschleunigen. Insbesondere können in der Zwischendatei Informationen weggelassen sein, die Zusatzfunktionen anderer Embedded-Geräte betreffen, die das (Ziel-) Embedded-Gerät nicht beherrscht. Andererseits können der Zwischendatei auch Informationen hinzugefügt sein, die z.B. der Gerätebeschreibung des Embedded-Geräts dienen. Auch kann beispielsweise die Syntax der für die Eingangsdaten verwendeten Auszeichnungssprache entfernt sein. Bevorzugt kann die Zwischendatei auch eine Binärdatei sein.

Weiter bevorzugt umfasst der Transformator einen Interpreter, welcher die Zwischendatei und/oder die Eingangsdaten einliest und aus den Informationen der eingelesenen Datei Werte für die Datenstruktur in dem Repository erzeugt. Die Zwischendatei kann also von dem Interpreter bzw. einem Interpreterprogramm des Transformators verwendet werden, um Werte von Variablen in dem Embedded-Gerät zur Laufzeit festzulegen. Die Zwischendatei kann noch so viele Strukturinformationen enthalten, dass der Interpreter unbekannte Elemente überlesen kann und damit auf- und abwärtskompatibel ist.

Der Filter des Transformators kann entweder auf einem von dem Embedded-Gerät getrennten Computersystem ausgeführt werden. Alternativ kann der Filter auch auf dem Embedded-Gerät ausgeführt werden.

Die Erfindung betrifft auch ein Verfahren zum Betrieb eines Embedded-Gerätes, bei dem ein Embedded-Gerät mit dem erfindungsgemäßen Konfigurationsverfahren oder eines seiner vorteilhaften Ausgestaltungen konfiguriert wird oder konfiguriert worden ist und die dabei an das Embedded-Gerät übertragenen Daten zum Betrieb des Embedded-Gerätes verwendet werden.

Die Erfindung betrifft auch ein Computerprogramm mit Programmcode-Mitteln, die derart eingerichtet sind, dass das vorstehend erläuterte Verfahren durchgeführt wird, wenn das Programm auf einem Computer ausgeführt wird.

Ferner betrifft die Erfindung ein Computerprogrammprodukt mit Programmcode-Mitteln, die auf einem computerlesbaren Datenträger gespeichert sind und derart eingerichtet sind, dass das vorstehend erläuterte Verfahren durchgeführt wird, wenn das Programmprodukt auf einem Computer ausgeführt wird.

Nachfolgend wird die Erfindung rein beispielhaft unter Bezugnahme auf die Zeichnung beschrieben. Es zeigt:

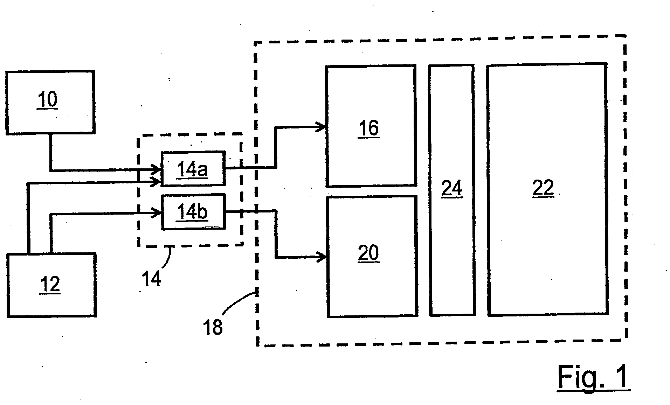

Fig. 1 eine Ausführungsform eines erfindungsgemäßen Verfahrens.

Fig. 1 zeigt schematisch den Ablauf einer Ausführungsform eines erfindungsgemäßen Verfahrens zur Konfigurierung beziehungsweise zum Betrieb eines Embedded-Geräts. Gemäß dem Verfahren werden Eingangsdaten, die in einer Konfigurationsdatei 10 gespeichert sind, einem Transformator 14 zugeführt. Der Transformator 14 wird mittels einer Transformationsbeschreibung 12 konfiguriert. Der Transformator 14 ist ein ausführbares Programm bzw. ein ausführbarer Code. Die Konfigurationsdatei 10 und die Transformationsbeschreibung 12 liegen in diesem Beispiel als XML-Dateien vor.

Der Transformator 14 umfasst einen ersten Teil 14a und einen zweiten Teil 14b. Der erste Teil 14a benötigt als Eingangswerte die Eingangsdaten aus der Konfigurationsdatei 10 und aus der Transformationsbeschreibung 12. Anhand der Transformationsbeschreibung 12 werden Daten aus der Konfigurationsdatei 10 entnommen und in binärer Form in einem Array of Struct in einem Repository 16 gespeichert. Das Repository 16 wird nach seiner Fertigstellung an ein Embedded-Gerät 18 übertragen.

Das Repository 16 ist wie oben beschrieben ein Datenspeicher, in welchem von dem Transformator 14 erzeugte Daten in Form eines Array of Struct zusammengefasst sein können. Bei dem Array of Struct kann es sich um ein Feld von Strukturen handeln, wobei jede Struktur eine Kombination mehrerer Variablen sein kann.

Der zweite Teil 14b des Transformators 14 benötigt als Eingang nur die Transformationsbeschreibung 12, wobei der zweite Teil 14b der Transformationsbeschreibung 12 entnimmt, welche Informationen aus der Konfigurationsdatei 10 in das Repository 16 übertragen werden. Für jede der verschiedenen Informationen legt der zweite Teil 14b eine Variable an, wobei die Variablen gesammelt in einer Programmstruktur 20 auf dem Embedded-Gerät 18 gespeichert werden. Die Programmstruktur 20 liegt ebenfalls in binärer Form vor und gibt an, an welchen Speicherpositionen in dem Repository 16 welche Variable gespeichert ist. In dem Repository 16 können die Variablen bereits als konstante Werte vorliegen, d. h. der Transformator 14 und insbesondere dessen erster Teil 14a erzeugt die Werte des Repositorys 16 bzw. entnimmt diese der Konfigurationsdatei 10. Das Repository 16 kann in dieser Ausführungsform in einem ROM des Embedded-Geräts 18 gespeichert sein und das ROM vollständig belegen.

Auf dem Embedded-Gerät 18 wird eine Applikation 22 ausgeführt, die beispielsweise einen Elektromotor (nicht gezeigt) steuert. Um den Betrieb des Elektromotors zu ermöglichen, sind in dem Repository 16 Drehzahlverläufe und Grenzwerte für die anzulegenden Ströme und Spannungen gespeichert, die aus der Konfigurationsdatei 10 entnommen sind. Die Applikation 22 greift auf die in dem Repository 16 gespeicherten Werte über ein Interface 24 zu. Um die in dem Repository 16 gespeicherten Daten korrekt zuordnen zu können, greift das Interface 24 auch auf die Programmstruktur 20 zu.

Um nun den Betrieb des Embedded-Geräts 18 und damit des Elektromotors zu verändern, kann die Konfigurationsdatei 10 verändert werden, woraufhin mittels der Transformationsbeschreibung 12 und des Transformators 14 automatisiert ein verändertes Repository 16 erzeugt werden kann. Beim Zugreifen der Applikation 22 auf die Daten in dem Repository 16 wird damit dann auch der Betrieb des Elektromotors an die neuen Parameter angepasst. Es ist auf diese Weise eine einfache und unaufwändige Anpassung des Betriebs des Embedded-Geräts möglich.

Mit dem erfindungsgemäßen Verfahren ist es möglich, anhand von Änderungen in der Konfigurationsdatei 10 und mittels der in der Transformationsbeschreibung 12 getroffenen Festlegungen eine automatische und damit effiziente und kostensparende Konfigurierung des Betriebs des Embedded-Geräts 18 vorzunehmen.

### Bezugszeichenliste

- 10: Konfigurationsdatei
- 12: Transformationsbeschreibung
- 14: Transformator
- 14a: erster Teil des Transformators
- 14b: zweiter Teil des Transformators
- 16: Repository
- 18: Embedded-Gerät
- 20: Programmstruktur
- 22: Applikation
- 24: Interface

## Patentansprüche

1. Verfahren zum Konfigurieren eines Embedded-Geräts (18), bei welchem
ein Transformator (14) mittels einer Transformationsbeschreibung (12) konfiguriert wird, wobei die Transformationsbeschreibung (12) Vorgaben darüber enthält, welche Daten aus Eingangsdaten (10) entnommen werden sollen, wobei die Eingangsdaten Konfigurationsdaten für das Embedded-Gerät (18) umfassen, und wobei die Transformationsbeschreibung (12) keinen Code in einer Programmiersprache umfasst und die Eingangsdaten (10) vorzugsweise als XML-Datei dargestellt sind,
die Eingangsdaten (10) von dem Transformator (14) nach den Vorgaben der Transformationsbeschreibung (12) verarbeitet werden,
der Transformator (14) bei dieser Verarbeitung Daten (16, 20) erzeugt, die von dem Embedded-Gerät (18) verarbeitbar sind, wobei die verarbeitbaren Daten (16, 20) auch eine Programmstruktur (20) umfassen, welche von dem Transformator (14) erzeugt wird, und
die von dem Transformator (14) erzeugten Daten (16, 20) an das Embedded-Gerät (18) übertragen werden.

2. Verfahren nach Anspruch 1,
**dadurch gekennzeichnet, dass**
die verarbeitbaren Daten (16, 20) in einem ausführbaren Format so gespeichert sind, dass die verarbeitbaren Daten (16, 20) nahtlos in den ausführbaren Code des Embedded-Geräts (18) eingegliedert werden und von einer Hochsprache, bevorzugt C oder C++, nativ gelesen werden können.

3. Verfahren nach Anspruch 1 oder 2,
**dadurch gekennzeichnet, dass** die von dem Transformator (24) erzeugten Daten (16, 20), die von dem Embedded-Gerät (18) verarbeitbar sind, ein Repository (16) umfassen.

4. Verfahren nach Anspruch 3,
dadurch g**ekennzeichnet**, dass
von dem Transformator (14) anhand der Vorgaben in der Transformationsbeschreibung (12) Informationen aus den Eingangsdaten (10) entnommen werden und in das Repository (16) übertragen werden, wobei das Repository (16) insbesondere in Datenstrukturen gegliederte Variablen umfasst,

5. Verfahren nach zumindest einem der Ansprüche 3 oder 4,
**dadurch gekennzeichnet, dass**
ausschließlich in der Transformationsbeschreibung (12) definierte Informationen in das Repository (16) übernommen werden.

6. Verfahren nach zumindest einem der Ansprüche 3 bis 5,
**dadurch gekennzeichnet, dass**
der Transformator (14) die Datenstrukturen in dem Repository (16) anlegt und die Datenstrukturen beim Betrieb des Embedded-Geräts (18) mit Werten gefüllt werden, wobei das Repository (16) bevorzugt in einem wiederbeschreibbaren Speicher des Embedded-Geräts (18) gespeichert wird.

7. Verfahren nach zumindest einem der Ansprüche 3 bis 5,
**dadurch gekennzeichnet, dass**
der Transformator (14) die Datenstrukturen in dem Repository (16) anlegt und mit Werten aus den Eingangsdaten (10) füllt.

8. Verfahren nach zumindest einem der Ansprüche 3 bis 7,
**dadurch gekennzeichnet, dass**
die Transformationsbeschreibung (12) derart ausgewählt ist, dass ein benötigter Speicherplatz für das Repository (16) eine solche Größe hat, dass er kleiner oder gleich dem Speicherplatz eines Nurlesespeichers des Embedded-Geräts (18) ist, in dem das Repository (16) des Embedded-Gerätes (18) gespeichert wird.

9. Verfahren nach zumindest einem der Ansprüche 3 bis 8,
**dadurch gekennzeichnet, dass**
das Repository (16) ein Array von Strukturen (array of struct) enthält, wobei das Array insbesondere ein Array mit festgelegter Länge und/oder mit konstanten Werten ist.

10. Verfahren nach zumindest einem der vorstehenden Ansprüche,
**dadurch gekennzeichnet, dass**
der Transformator (14) einen Filter umfasst und der Filter die Eingangsdaten (10) in eine Zwischendatei umwandelt, wobei die Zwischendatei nur für das Embedded-Gerät (18) relevante Informationen enthält.

11. Verfahren nach zumindest einem der Ansprüche 3 bis 10,
**dadurch gekennzeichnet, dass**
der Transformator (14) einen Interpreter umfasst, welcher die Eingangsdaten und/oder die Zwischendatei einliest und aus den Informationen der eingelesenen Daten (10) Werte für die Datenstruktur in dem Repository (16) erzeugt.

12. Verfahren zum Betrieb eines Embedded-Gerätes, bei dem das Embedded-Gerät mit einem Konfigurationsverfahren nach einem der Ansprüche 1 bis 11 konfiguriert wird und die von dem Transformator erzeugten Daten zum Betrieb des Embedded-Gerätes verwendet werden, oder die vom Transformator (14) mit einem Konfigurationsverfahren nach einem der Ansprüche 1 bis 11 erzeugten Daten zum Betrieb des Embedded-Gerätes (18), das mit einem Konfigurationsverfahren nach einem der Ansprüche 1 bis 11 konfiguriert worden ist, verwendet werden.

13. Computerprogramm mit Programmcode-Mitteln, die derart eingerichtet sind, dass ein Verfahren nach wenigstens einem der Ansprüche 1 bis 12 durchgeführt wird, wenn das Programm auf einem Computer ausgeführt wird.

14. Computerprogrammprodukt mit Programmcode-Mitteln, die auf einem computerlesbaren Datenträger gespeichert sind und derart eingerichtet sind, dass ein Verfahren nach wenigstens einem der Ansprüche 1 bis 12 durchgeführt wird, wenn das Programmprodukt auf einem Computer ausgeführt wird.

## Claims

1. A method of configuring an embedded device (18) in which
a transformer (14) is configured by means of a transformation description (12), wherein the transformation description (12) includes specifications on which data should be taken from input data (10), wherein the input data comprise configuration data for the embedded device (18), and wherein the transformation description (12) does not comprise any code in a programming language and the input data (10) are preferably represented as an XML file;
the input data (10) are processed by the transformer (14) in accordance with the specifications of the transformation description (12);
the transformer (14) generates data (16, 20) during this processing which can be processed by the embedded device (18), wherein the processable data (16, 20) also comprise a program structure (20) which is generated by the transformer (14); and
the data (16, 20) generated by the transformer (14) are transmitted to the embedded device (18).

2. A method in accordance with claim 1,
**characterized in that**
the processable data (16, 20) are stored in an executable format such that the processable data (16, 20) can be seamlessly integrated into the executable code of the embedded device (18) and can be read natively by a high-level language, preferably C or C++.

3. A method in accordance with claim 1 or claim 2,
**characterized in that**
the data (16, 20) which are generated by the transformer (14) and which can be processed by the embedded device (18) comprise a repository (16).

4. A method in accordance with claim 3,
**characterized in that**
information is taken from the input data (10) by the transformer (14) with reference to the specifications in the transformation description (12) and is transmitted into the repository (16), with the repository (16) comprising variables which are in particular structured in data structures.

5. A method in accordance with at least one of the claims 3 or 4,
**characterized in that**
only information defined in the transformation description (12) is taken over into the repository (16).

6. A method in accordance with at least one of the claims 3 to 5,
**characterized in that**
the transformer (14) creates the data structures in the repository (16) and the data structures are filled with values in the operation of the embedded device (18), with the repository (16) preferably being stored in a rewritable memory of the embedded device (18).

7. A method in accordance with at least one of the claims 3 to 5,
**characterized in that**
the transformer (14) creates the data structures in the repository (16) and fills them with values from the input data (10).

8. A method in accordance with at least one of the claims 3 to 7,
**characterized in that**
the transformation description (12) is selected such that a required memory space for the repository (16) has such a size that it is smaller than or equal to the memory space of a read-only memory of the embedded device (18) in which the repository (16) of the embedded device (18) is stored.

9. A method in accordance with at least one of the claims 3 to 8,
**characterized in that**
the repository (16) includes an array of structs, with the array in particular being an array having a fixed length and/or having constant values.

10. A method in accordance with at least one of the preceding claims,
**characterized in that**
the transformer (14) comprises a filter and the filter converts the input data (10) into an intermediate file, with the intermediate file only including information relevant to the embedded device (18).

11. A method in accordance with at least one of the claims 3 to 10,
**characterized in that**
the transformer (14) comprises an interpreter which reads in the input data and/or the intermediate file and generates values for the data structure in the repository (16) from the information of the read-in data (10).

12. A method of operating an embedded device in which the embedded device is configured using a configuration method in accordance with any one of the claims 1 to 11 and the data generated by the transformer are used for operating the embedded device or
the data generated by the transformer (14) using a configuration method in accordance with any one of the claims 1 to 11 are used for operating the embedded device (18) which was configured using a configuration method in accordance with any one of the claims 1 to 11.

13. A computer program having program code means which are adapted such that a method in accordance with at least one of the claims 1 to 12 is carried out when the program is executed on a computer.

14. A computer program product having program code means which are stored on a computer-readable data carrier and which are adapted such that a method in accordance with at least one of the claims 1 to 12 is carried out when the program product is executed on a computer.

## Revendications

1. Procédé pour configurer un appareil intégré (18), dans lequel un transformateur (14) est configuré au moyen d'un descriptif de transformation (12),
le descriptif de transformation (12) comprend des instructions pour savoir quelles données doivent être prélevées de données d'entrée (10),
les données d'entrée comprennent des données de configuration pour l'appareil intégré (18), et
le descriptif de transformation (12) ne comprend pas de code dans un langage de programmation et les données d'entrée (10) sont représentées de préférence sous forme de fichier XML,
les données d'entrée (10) sont traitées par le transformateur (14) selon les instructions du descriptif de transformation (12),
lors de ce traitement, le transformateur (14) génère des données (16, 20) susceptibles d'être traitées par l'appareil intégré (18), les données traitables (16, 20) comprenant également une structure de programme (20) qui est générée par le transformateur (14), et
les données (16, 20) générées par le transformateur (14) sont transmises à l'appareil intégré (18).

2. Procédé selon la revendication 1,
**caractérisé en ce que**
les données traitables (16, 20) sont mémorisées en un format exécutable de telle sorte que les données traitables (16, 20) sont incorporées en continu dans le code exécutable de l'appareil intégré (18) et peuvent être lues de façon native par un langage de haut niveau, de préférence par C ou C++.

3. Procédé selon la revendication 1 ou 2,
**caractérisé en ce que**
les données (16, 20) générées par le transformateur (24) et traitables par l'appareil intégré (18) comprennent un dépôt (repository) (16).

4. Procédé selon la revendication 3,
**caractérisé en ce que**
à la base des instructions dans le descriptif de transformation (12), des informations sont prélevées des données d'entrée (10) par le transformateur (14) et elles sont transmises jusque dans le dépôt (16), le dépôt (16) comprenant en particulier des variables regroupées en structures de données.

5. Procédé selon l'une des revendications 3 ou 4,
**caractérisé en ce que**
exclusivement des informations définies dans le descriptif de transformation (12) sont reprises dans le dépôt (16).

6. Procédé selon l'une au moins des revendications 3 à 5,
**caractérisé en ce que**
le transformateur (14) crée les structures de données dans le dépôt (16) et pendant le fonctionnement de l'appareil intégré (18), les structures de données sont remplies de valeurs, le dépôt (16) étant stocké de préférence dans une mémoire réinscriptible de l'appareil intégré (18).

7. Procédé selon l'une au moins des revendications 3 à 5,
**caractérisé en ce que**
le transformateur (14) crée les structures de données dans le dépôt (16) et les remplit de valeurs parmi les données d'entrée (10).

8. Procédé selon l'une au moins des revendications 3 à 7,
**caractérisé en ce que**
le descriptif de transformation (12) est choisi de telle sorte qu'un espace de stockage nécessaire pour le dépôt (16) a une taille telle qu'il est inférieur ou égal à l'espace de stockage d'une mémoire morte de l'appareil intégré (18) dans laquelle est stocké le dépôt (16) de l'appareil intégré (18).

9. Procédé selon l'une au moins des revendications 3 à 8,
**caractérisé en ce que**
le dépôt (16) comprend un tableau de structures (array of struct), le tableau étant en particulier un tableau avec une longueur fixe et/ou avec des valeurs constantes.

10. Procédé selon l'une au moins des revendications précédentes,
**caractérisé en ce que**
le transformateur (14) comprend un filtre et le filtre transforme les données d'entrée (10) en un fichier intermédiaire, le fichier intermédiaire ne comprenant que des informations pertinentes pour l'appareil intégré (18).

11. Procédé selon l'une au moins des revendications 3 à 10,
**caractérisé en ce que**
le transformateur (14) comprend un interpréteur qui lit les données d'entrée et/ou le fichier intermédiaire et qui génère des valeurs pour la structure de données dans le dépôt (16) à partir des informations des données lues (10).

12. Procédé pour faire fonctionner un appareil intégré, dans lequel l'appareil intégré est configuré par un procédé de configuration selon l'une des revendications 1 à 11 et les données générées par le transformateur sont utilisées pour faire fonctionner l'appareil intégré, ou les données générées par le transformateur (14) par un procédé de configuration selon l'une des revendications 11 à 11 sont utilisées pour faire fonctionner l'appareil intégré (18) qui a été configuré par un procédé de configuration selon l'une des revendications 1 à 11.

13. Programme informatique ayant des moyens de code de programme qui sont conçus de manière à mettre en oeuvre un procédé selon l'une au moins des revendications 1 à 12 lorsque le programme est exécuté sur un ordinateur.

14. Produit de programme informatique ayant des moyens de code de programme qui sont stockés sur un support de données lisible par ordinateur et qui sont conçus de manière à mettre en oeuvre un procédé selon l'une au moins des revendications 1 à 12 lorsque le produit de programme est exécuté sur un ordinateur.
